# EUROPEAN PATENT APPLICATION

(11) **EP 3 002 113 A1**
(43) Date of publication of application: **06.04.2016**
(21) Application number: 15188242.0
(22) Date of filing: 02.10.2015
(51) Int. Cl.: B29C 70/52, B33Y 30/00, B29C 67/00

(54) **APPARATUS AND METHOD FOR PRODUCING OBJECTS UTILIZING THREE-DIMENSIONAL PRINTING**

(30) Priority: 03.10.2014 US 201462059416 P; 30.09.2015 US 201514870409
(71) Applicant: Tyco Electronics Corporation, Berwyn, PA 19312 (US)
(72) Inventor: Fry, Charles David, New Bloomfield, PA Pennsylvania 17068 (US); Locondro, Joseph David, Jacobus, PA Pennsylvania 17407 (US); Naware, Gaurang N., Harrisburg, PA Pennsylvania 17102 (US)
(74) Representative: Johnstone, Douglas Ian

(57) **Abstract**

A method and apparatus (10) for the fabrication of an article made using a three-dimensional printing process. The invention includes depositing material from a print head (32) onto a build plate (36) located in a build chamber (26) to form an article, heating ambient air in the build chamber (26) to a first temperature which acts as a proper sink temperature for cooling of the article, and heating the build plate (36) to a second temperature which is higher than the first temperature. The first and second temperatures are controlled to minimize warping and thermal stress of the article.

## Description

The present invention is directed to a method and an apparatus for the production of a three-dimensional object in which the warping and thermal stress of the object are minimized. In particular, the invention is directed to a method and apparatus for providing a build environment in which the ambient environmental temperature and the build plate temperatures are individually controlled, thereby allowing the two parameters in the printing process to be decoupled from each other.

It is common in metal and/or plastic parts manufacturing to produce large batch sizes and serial parts by injection molding or extrusion. The advantage of plastic injection molding is, in particular, owing to the highly accurate production of complex part geometries, whereby the functionality of the injection molding process optimally satisfies the requirements for the cost-effective and economical production of plastic parts.

However, the need for individual units and small batch sizes of plastic parts, with or without the requirement of being supplied within a short time frame and with properties similar to those of injection molding parts, is continuing to grow. Manufacturing processes exist for the production of such parts which are widely known under the term "prototyping." The production of such parts is generally based on the generation of the geometry from 3D data. These geometries are produced in a variety of forms by using the corresponding material, such as meltable layers of powder by heat input, e.g. with lasers, by generative systems such as printing processes, in various combinations of powder parts and using the "melt strand" process.

Various three-dimensional printing devices are currently available to produce parts from such 3D data. Three-dimensional (3D) printing refers to processes that create 3D objects based on digital 3D object models and a materials dispenser. In 3D printing, a dispenser moves in at least 2-dimensions and dispenses material in accordance to a determined print pattern. To a build a 3D object, a platform that holds the object being printed is adjusted such that the dispenser is able to apply many layers of material. In other words, a 3D object may be printed by printing many layers of material, one layer at a time. If the dispenser moves in 3-dimensions, movement of the platform is not needed. 3D printing features such as speed, accuracy, color options and cost vary for different dispensing mechanisms and materials.

A known system creates solid models or parts by depositing thermally solidifiable materials. In these processes, a flowable material is sequentially deposited on a substrate or on previously deposited thermoplastic material. The material solidifies after it is deposited and is thus able to incrementally create a desired form. Examples of thermally solidifiable systems include fused deposition modeling, wax jetting, metal jetting, consumable rod arc welding and plasma spraying. Such processes include Fused Deposition Modeling and Fused Filament Fabrication methods of 3D printing.

Since most deposition materials change density with temperature, these systems share the challenge of minimizing geometric distortions of the product prototypes that are produced by these density changes. Thermally solidifiable systems are subject to both warping or curling and thermal stress and shock due to plastic deformation and the like. Curling is manifest by a curvilinear geometric distortion which is induced into a prototype during a cooling period. The single largest contributor to such a geometric distortion (with respect to prototypes made by the current generation of rapid prototyping systems which utilize a thermally solidifiable material) is a change in density of the material as it transitions from a relatively hot flowable state to a relatively cold solid state.

Techniques exist to reduce the impact of curl. One technique involves the heating of the ambient build environment to reduce the possible temperature differences. Another technique is to carefully choose build materials which exhibit lowest possible thermal expansion coefficients. Yet another technique is to deposit the build material at the lowest possible temperature.

The art is replete with various solid modeling teachings. For instance, U.S. Pat. No. 5,121,329 to Crump, describes a fused deposition modeling system. While the Crump system incorporates a heated build environment, it requires that the deposited material be below its solidification temperature, as subsequent layers of material are added. U.S. Pat. No. 4,749,347 to Vilavaara and U.S. Pat. No. 5,141,680 to Almquist et al. describe rapid prototyping systems that incorporate flowable, thermally solidifying material. Both patents teach a build environment that is maintained at and below the solidification temperature of the extrusion material.

Another known system and method, disclosed in U.S. Pat. No. 5,866,058 to Batchelder et al., calculates a sequence for extruding flowable material that thermally solidifies so as to create the desired geometric shape. A heated flowable modeling material is then sequentially extruded at its deposition temperature into a build environment that maintains the volume in the vicinity of the newly deposited material in a deposition temperature window between the material's solidification temperature and its creep temperature. Subsequently, the newly extruded material is gradually cooled below its solidification temperature while maintaining temperature gradients in the geometric shape below a maximum value set by the desired part's geometric accuracy.

Another known system, as disclosed in the RepRap open source initiative, discloses a heated build platform. Printing on a heated bed allows the printed part to stay warm during the printing process and allow more even shrinking of the plastic as it cools below melting point.

However, while the controlled build environment or the heated bed concept which directly heats the part being built help to control warping or curling, parts made by these techniques are still exposed to excessive thermal shock when being built in these environments.

It would, therefore, be beneficial to provide an apparatus and method which minimizes the warping and thermal stress of the part. In particular, it would be beneficial to provide an ambient environmental temperature for optimal cooling while the bed temperature raises the part temperature above the ambient temperature in the build environment, thereby allowing the two parameters in the printing process to be decoupled from each other.

According to one aspect of the invention, the solution is provided by a three-dimensional printing apparatus as disclosed herein. The apparatus includes an enclosure with a build chamber. A print head is provided in the build chamber. The print head deposits material to form an article. A first heating device is positioned proximate the print head. The first heating device heats ambient air in the build chamber to a first temperature which acts as a temperature sink for cooling of the article. A heated build plate is positioned in the build chamber. The heated build plate has a second heating device which heats a surface of the heated build plate on which the article is fabricated. The second heating device heats the top surface of the heated build plate to a second temperature which is higher than the first temperature. The first and second temperatures are controlled to minimize warping and thermal stress of the article.

According to another aspect of the invention, the solution is provided by a method for the fabrication of an article made using a three-dimensional printing process, the method comprising: depositing material from a print head onto a build plate located in a build chamber to form an article; heating ambient air in the build chamber to a first temperature which acts as a proper sink temperature for cooling of the article; heating the build plate to a second temperature which is higher than the first temperature; wherein the first and second temperature are controlled to minimize warping and thermal stress of the article.

The invention will now be described by way of example with reference to the accompanying drawings in which:
FIG. 1 is a schematic view of an illustrative three dimensional printing apparatus according to the present invention; and
FIG. 2 is a process flow diagram for the method of fabricated an article in a three dimensional printing apparatus.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the preferred embodiments. Accordingly, the invention expressly should not be limited to such preferred embodiments illustrating some possible non-limiting combination of features that may exist alone or in other combinations of features, the scope of the invention being defined by the claims appended hereto.

The invention is directed to a method and an apparatus for the production of a three-dimensional object in which the warping and internal thermal stress of the object are minimized. A build environment is provided in which the ambient environmental temperature and the build plate temperatures are individually controlled, thereby allowing the two parameters in the printing process to be decoupled from each other. The method and apparatus can be used for the fabrication of parts or articles in both the Fused Deposition Modeling process and the Fused Filament Fabrication process. These parts or articles are formed from the deposition of thermally solidifiable materials, which include, but are not limited to, filled and unfilled polymers and high temperature thermoplastics.

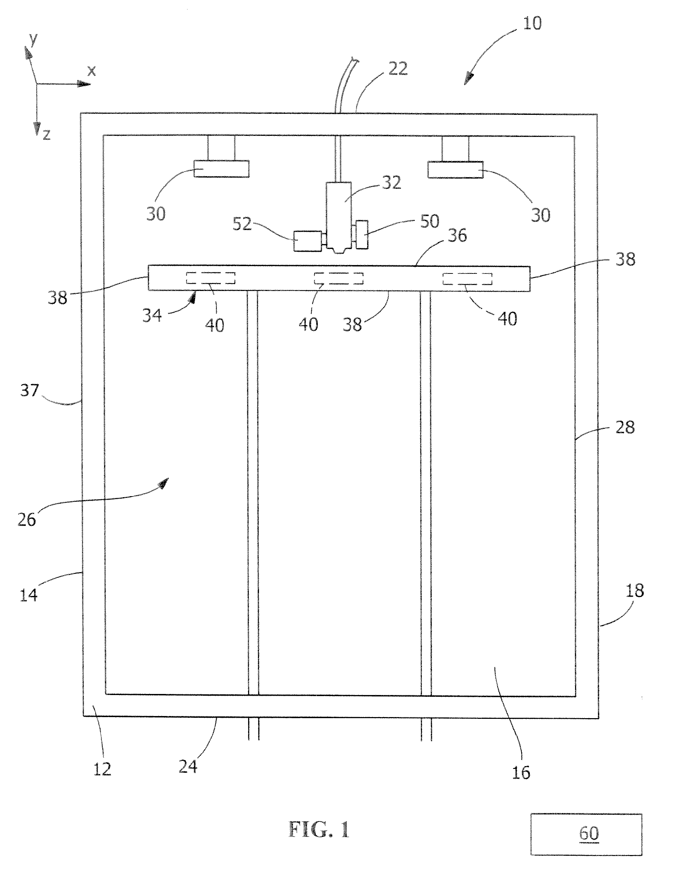

As shown in the illustrative embodiment of FIG. 1, the enclosure or apparatus 10 includes an oven 12 with insulated side walls 14, 16, 18, 20, an insulated top wall 22 and an insulated bottom wall 24. The walls define a build chamber 26 which is accessible through an insulated door 28 which is provided in side wall 18.

In the illustrative embodiment shown, heating devices or elements 30 are provided proximate a print head 32 and proximate the top wall 22. The heating elements may be heating coils or other known heating devices which can heat the ambient temperature in the chamber 26 to the desired temperature. In other embodiments, the heating elements 30 may be provided at other locations within the chamber 26. The heating elements 30 heat the ambient air in the chamber 26 by the radiation of the heat and by natural convection caused by temperature differences within the chamber. Alternatively, fans or blowers may be provided to more evenly distribute the heat.

Alternatively, heated air may be provided into the chamber 26 by heating ducts or the like which have openings in the one or more respective walls of the chamber 26. In such an embodiment, blowers may be located in the ducts to provide the air flow required. Return openings may also be provided in the walls to allow for the proper circulation of the heated air within the chamber 26. In this type of oven, the ducts are connected to heaters which heat the air which is circulated through the duct and returned to the chamber. Insulation 37 surrounds wall of the chamber 26 to keep in the heat maintained in the build chamber 26.

Regardless of the heat source, the build chamber 26 is designed to reach a predetermined range of temperatures, such as, but not limited to 0 degrees Celsius to 240 degrees Celsius. However, the actual temperature achieved in the chamber 26 will be directly related to the type of material that is used to fabricate the part or article. The ambient air temperature in the chamber 26 facilitates the cooling of the part or article. In addition, the ambient air temperature in the chamber 26 controls the cooling rate of the material as it moves from the print head 32 to a build plate 34 or to the previously deposited layers on the build plates 34.

The print head 32 and the heated build plate or platform 34 are positioned in the chamber 26 of the oven 12. The print head 32 is positioned proximate the top wall 22 of the chamber 26. The build plate 34 is positioned below the print head 32.

The apparatus 10 builds three-dimensional objects in build chamber 26 by depositing material from print head 32 onto the build plate 34. As deposition of the material occurs, the print head 32 is moved in the x,y plane and the build plate 34 is moved along the z-axis. To support the part or article as it is being built, the build plate 34 must have an upper surface to which the material will adhere. Preferably, a substrate is mounted on top of the build plate 34 upon which the part or article is built. Use of a substrate allows for easy removal of the part or article from the apparatus after completion thereof.

The heated build plate 34 helps to prevent warping of the part or article as it is fabricated. As the extruded material cools, it shrinks slightly. When this shrinking process does not occur throughout a fabricated part or article evenly, the result is a warped part or article. Depositing the material on a heated build plate allows the printed part to stay heated during the printing process and allows for more even shrinking of the material as it cools below its melting point.

In the illustrative embodiment, the heated build plate 34 has a top surface 36 and side surfaces 38. The top surface 36 receives the deposited material thereon. The top surface 36 can be made of any material having the appropriate thermal conductivity required to properly heat the part or article which is fabricated thereon. If the top surface 36 is made of material with a low thermal conductivity, sudden spikes or drops in temperature are unlikely, thereby providing a more thermally stable build platform. However, low thermal conductivity can cause hot spots depending upon the geometry of the part or article and the characteristics of the deposited material. If the top surface 36 is made of material with a high thermal conductivity, the surface will distribute the heat evenly. Materials for the top surface 36, include, but are not limited to, metal, ceramic or glass.

A heating device 40 extends between the side surfaces 38 and is positioned proximate the top surface 36. The heating device 40 may be, but is not limited to, heaters, coils, heat pipes, micro/nano heaters, micro/nano channels, electromagnetic induction heaters, and/or other known heating device which can heat the top surface 36 to the desired temperature. The heating device 40 is positioned to uniformly heat the top surface 36. Alternatively, more than one heating device 40 may be provided to ensure even heat distribution across the top surface 36. Regardless of the heat device 40, the build plate 34 is designed to reach a predetermined range of temperatures, such as, but not limited to 40 degrees Celsius to 300 degrees Celsius.

It has been determined that by maintaining a previously deposited material (in a three-dimensional printing system utilizing thermal solidification) within a specific temperature window (which varies with the type of material used), that internal stresses present in the deposited material are relieved and geometric distortions reduced. At least in the vicinity of where newly deposited material will be applied, the previously deposited material must be maintained at a temperature that is preferably in a range between the material's solidification temperature and its relaxation temperature, which is defined as the temperature that the material is just sufficiently solid that fabrication can occur, while the internal stresses can relax without impacting part geometry. More preferably, the temperature should be maintained closer to the relaxation temperature. In general, an entire build layer (outside of the immediate region of the extrusion nozzle) should be maintained above the material's solidification temperature and below the material's relaxation temperature.

By maintaining the temperature of the resulting part or article between the material's solidification temperature and its relaxation temperature, a balance is struck between the part or article being so weak that it droops and the part or article being so stiff that stresses cause geometric distortions. Further, inherent stresses are allowed to relax, leading to more dimensionally accurate models.

Once the entire part or article has been completed, it must be cooled below the material's solidification temperature before it is handled or significantly stressed.

By combining the technique of controlling the ambient environmental temperature and the technique of controlling the temperature of the build plate, an optimum process is achieved. The ambient environmental temperature can be set and maintained at a temperature which acts as the proper sink temperature for optimal cooling while the build plate temperature can be set and maintained to a higher temperature to raise the part or article temperature above the ambient environmental temperature. This allows the ambient temperature and the build plate temperature to be decoupled from each other. Consequently, the temperature of the part or article during fabrication can be set and maintained to a higher temperature than would be possible by just setting the ambient environmental temperature of the chamber 26 to this temperature. Essentially, the temperature of the part or article will be controlled by the temperature of the build plate 34 while the ambient environmental temperature if the chamber 26 will control the cooling rate of the material from the print head 32 to the deposition on the part or article.

In alternate illustrative embodiments, a third device 50 can be added. For some materials, the extruded material does not carry sufficient energy to bond the newly deposited material to the previous layer, even if the part or article is maintained at an elevated temperature. In such instances, additional heat and/or energy may be introduced at the bond site by the third device 50. The device 50 may be, but is not limited to, a hot air pencil, a laser, a focused infrared source, a localized microwave source or a localized RF energy source. This extra energy and/or heating applied to the previous layers will predispose the previous layer to bond immediately before and/or during the extrusion process.

In alternate illustrative embodiments, a fourth device 52 or source of energy can be added which heats only the top layer. This will predispose the entire top layer to bonding while allowing the unexposed portions of the part or article to be maintained at a lower temperature. The device 52 may be, but is not limited to, an infrared source, a microwave source or an RF energy source.

The heating devices described herein may all be controlled by a controller 60 or similar device which controls various properties of the apparatus 10. The heating devices may communicate with the controller 60 wirelessly or via fixed connections, such as, but not limited to, wires.

For all the processes described above, energy may be added in addition to or in place of heat. Specifically, ultrasonic energy may be used. For example, if the material is a non-newtonian fluid (i.e. polymer), the material can be caused to flow better and bond better by forms of energy other than heat. As a result, ultrasonic energy can be used to achieve some of the same results.

In alternate illustrative embodiments, a cooling device or pencil can be added to the process to cause fast solidification of the part or article after extrusion or fabrication. For example, this will be required with some polymers that tend toward low viscosity at the point when extrusion is possible.

Without departing from the scope of the invention, others ways of adding energy can be combined, each one controlling a different aspect of the build process. As different energy and/or heating sources are provided within the chamber, each of the sources allows the temperature parameters to be decoupled or isolated from each other. This allows for the isolation of the many aspects of the building process including, but not limited to, part temperature, part cooling rate, extrusion to part bonding energy, top layer preheat/preparation zone, extrusion cooling and others.

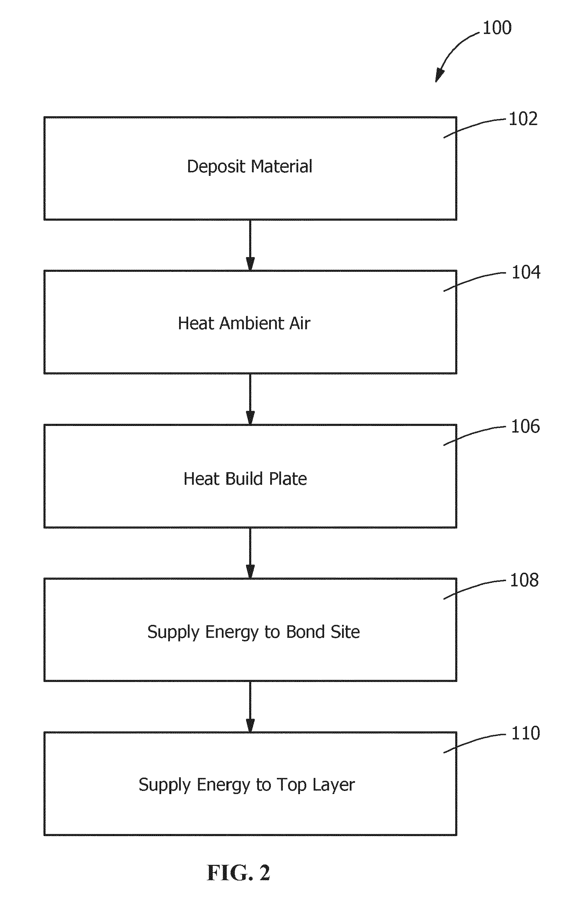

As best shown in FIG. 2, the invention is also directed to a method 100 for the fabrication of a device or article made using a three-dimensional printing process. The method includes depositing material from a print head onto a build plate located in a build chamber to form an article as represented in box 102, heating ambient air in the build chamber to a first temperature which acts as a proper temperature sink for cooling of the article as represented in box 104 and heating the build plate to a second temperature which is higher than the first temperature as represented in box 106. The first and second temperatures are controlled to minimize warping and thermal stress of the article.

The method may also include supplying energy to a bond site in which the material is deposited on a previously deposited layer of the article, wherein the energy facilitates the bonding of the material to the previously deposited layer, as represented in box 108.

The method may also include supplying energy to heat only a previously deposited top layer of the article deposited on the build plate, wherein the energy facilitates the bonding of the material to the previously deposited top layer, as represented in box 110.

The apparatus and method described herein minimizes the warping and thermal stress of the fabricated part or article. The apparatus and method provide an ambient environmental temperature in the build chamber of the enclosure for optimal cooling while the build plate temperature raises the part temperature above the ambient environmental temperature, thereby allowing the two temperature parameters in the build chamber to be decoupled from each other.

While the invention has been described with reference to a preferred embodiment, it will be understood by those skilled in the art that various changes may be made and equivalents may be substituted for elements thereof without departing from the scope of the invention as defined in the accompanying claims. In particular, it will be clear to those skilled in the art that the present invention may be embodied in other specific forms, structures, arrangements, proportions, sizes, and with other elements, materials, and components, without departing from the scope of the claims. One skilled in the art will appreciate that the invention may be used with many modifications of structure, arrangement, proportions, sizes, materials, and components and otherwise, used in the practice of the invention, which are particularly adapted to specific environments and operative requirements without departing from the scope of the claims. The presently disclosed embodiments are therefore to be considered in all respects as illustrative and not restrictive, the scope of the invention being defined by the appended claims, and not limited to the foregoing description or embodiments.

## Claims

1. A three-dimensional printing apparatus (10) comprising:
an enclosure with a build chamber (26);
a print head (32) provided in the build chamber (26), the print head (32) configured to deposit material to form an article;
a first heating device (30) positioned proximate the print head (32), the first heating device (30) configured to heat ambient air in the build chamber (26) to a first temperature which acts as a temperature sink for cooling of the article; and
a heated build plate (34) positioned in the build chamber (26), the heated build plate (34) having a second heating device (40) which is configured to heat a surface of the heated build plate (34) on which the article is fabricated, the second heating device (40) is configured to heat the top surface (36) of the heated build plate (34) to a second temperature which is higher than the first temperature.

2. The apparatus (10) as recited in claim 1, wherein a controller (60) is provided to control the first and second temperatures to minimize warping and thermal stress of the article.

3. The apparatus (10) as recited in claim 1 or 2, wherein a third device (50) is provided to supply energy to a bond site in which the material extruded from the print head (32) is deposited on a previously deposited layer of the article, wherein the energy facilitates the bonding of the material to the previously deposited layer.

4. The apparatus (10) as recited in claim 3, wherein the third device (50) is selected from the group consisting of a hot air pencil, a laser, a focused inferred source, a localized microwave source, or a localized RF energy source.

5. The apparatus (10) as recited in claim 1 or 2, wherein a fourth device (52) is provided to supply energy to heat only a previously deposited top layer of the article deposited on the heated build plate (34), wherein the energy facilitates the bonding of the material to the previously deposited top layer.

6. The apparatus (10) as recited in claim 5, wherein the fourth device (52) is a localized RF energy source.

7. The apparatus (10) as recited in any preceding claim, wherein the first heating device (30) is positioned proximate a top wall (22) of the build chamber (26).

8. The apparatus (10) as recited in any preceding claim, wherein an ultrasonic device is provided to supply ultrasonic energy to facilitate the flow of material.

9. A method for the fabrication of an article made using a three-dimensional printing process, the method comprising:
depositing material from a print head (32) onto a build plate (34) located in a build chamber (26) to form an article;
heating ambient air in the build chamber (26) to a first temperature which acts as a proper sink temperature for cooling of the article;
heating the build plate (34) to a second temperature which is higher than the first temperature; and
controlling the first and second temperatures to minimize warping and thermal stress of the article.

10. The method as recited in claim 9, comprising controlling the first temperature and the second temperature by a controller (60).

11. The method as recited in claim 9 or 10, comprising supplying energy to a bond site in which the material is deposited on a previously deposited layer of the article, wherein the energy facilitates the bonding of the material to the previously deposited layer.

12. The method as recited in claim 11, wherein the energy is supplied by a device (50) selected from the group consisting of a hot air pencil, a laser, a focused inferred source, a localized microwave source, or a localized RF energy source.

13. The method as recited in claim 9 or 10, comprising supplying energy to heat only a previously deposited top layer of the article deposited on the build plate (34), wherein the energy facilitates the bonding of the material to the previously deposited top layer.

14. The method as recited in claim 13, wherein the energy is supplied by a device (52) which is a localized RF energy source.
